# FASCICULE DE BREVET EUROPEEN

(11) **EP 0 793 083 B1**
(45) Date de publication et mention de la délivrance du brevet: **19.09.2001**
(21) Numéro de dépôt: 97400288.3
(22) Date de dépôt: 07.02.1997
(51) Int. Cl.: G01M 3/32, G01M 3/02

(54) **Dispositif de contrôle de l'étanchéité de la paroi de tubes d'un échangeur de chaleur**
Vorrichtung zur Dichtigkeitsprüfung der Rohrwandungen eines Wärmetauschers
Device for leak detection in tube walls of a heat exchanger

(30) Priorité: 28.02.1996 FR 9602500
(43) Date de publication de la demande: 03.09.1997
(73) Titulaire: FRAMATOME, 92400 Courbevoie (FR)
(72) Inventeur: Michaut, Bernard, 69003 Lyon (FR)
(74) Mandataire: Bouget, Lucien

(56) Documents cités:
- US-A- 3 919 880
- US-A- 4 602 500
- US-A- 5 194 215
- US-A- 5 438 862

## Description

L'invention concerne un dispositif de contrôle de l'étanchéité de la paroi de tubes d'un échangeur de chaleur et en particulier de tubes d'un générateur de vapeur d'un réacteur nucléaire à eau sous pression.

Les générateurs de vapeur des réacteurs nucléaires à eau sous pression comportent un faisceau de tubes qui sont cintrés pour présenter la forme d'un U et dont les extrémités sont fixées dans une plaque tubulaire.

Lorsque le générateur de vapeur est en fonctionnement, l'eau de refroidissement du réacteur à très haute température et à très haute pression circule à l'intérieur des tubes du faisceau. La paroi des tubes du faisceau du générateur de vapeur constitue une paroi d'échange à travers laquelle l'eau de refroidissement sous pression du réacteur nucléaire cède de la chaleur à de l'eau alimentaire dont on assure l'échauffement puis la vaporisation à l'intérieur du générateur de vapeur. La paroi des tubes du faisceau du générateur de vapeur constitue donc une barrière entre la partie primaire et la partie secondaire du générateur de vapeur.

Il est donc extrêmement important que la paroi des tubes du générateur de vapeur présente une très bonne étanchéité, de manière à éviter une introduction de fluide primaire sous pression et renfermant des espèces activées, à l'intérieur du circuit secondaire du générateur de vapeur. Les tubes du générateur de vapeur peuvent subir une certaine dégradation en service à l'intérieur du réacteur nucléaire, par exemple du fait de la corrosion du métal de la paroi des tubes par l'eau sous pression constituant le fluide primaire du réacteur nucléaire ou par l'eau d'alimentation constituant le fluide secondaire. La dégradation des tubes du générateur de vapeur peut se traduire par l'apparition de fissures et donc de fuites de fluide primaire dans la partie secondaire du générateur de vapeur.

La réglementation relative à l'exploitation des réacteurs nucléaires à eau sous pression impose certains contrôles d'étanchéité des tubes de générateur de vapeur, avec une certaine périodicité, de manière à vérifier, en particulier que le débit de fuite entre le circuit primaire et le circuit secondaire se situe en-dessous d'une limite imposée.

Tous ces contrôles doivent permettre également de repérer les tubes du faisceau du générateur de vapeur présentant des fuites.

On réalise généralement l'inspection des tubes du faisceau du générateur de vapeur par courants de Foucault.

Dans le cas où le contrôle par courants de Foucault décèle un défaut dans la paroi d'un tube, on effectue un contrôle supplémentaire en utilisant de l'hélium pour déterminer si le tube est susceptible de présenter une fuite nécessitant sa réparation, son bouchage ou son remplacement.

Cependant, il s'est avéré que les essais effectués à l'hélium n'étaient pas très représentatifs et ne permettaient pas d'évaluer de manière satisfaisante le taux de fuite du tube afin de déterminer en particulier s'il est nécessaire de réaliser le bouchage du tube. Pour éviter tout risque lors de l'exploitation du générateur de vapeur, on est donc amené à réaliser le bouchage de tubes qui ne présentent pas des fuites ayant un caractère critique. Les opérations de bouchage de tubes des générateurs de vapeur sont délicates à réaliser et coûteuses et les générateurs de vapeur présentent un rendement et une efficacité d'autant plus faibles qu'ils présentent un plus grand nombre de tubes obturés.

Il est donc souhaitable de disposer d'un procédé de contrôle des tubes de générateur de vapeur et plus généralement des tubes d'échangeurs de chaleur permettant d'évaluer ou de mesurer de la façon la plus exacte possible le débit de fuite du tube en service.

Dans le US-A-4,602,500, on a proposé un dispositif pour détecter des fuites dans des tubes et dans des zones de jonction des tubes qui comporte une tête d'injection de fluide sous pression par l'une des extrémités des tubes, un moyen d'obturation du tube, des moyens d'alimentation en fluide sous pression de la tête d'injection, des moyens d'introduction et de fixation rapide de la tête d'injection dans une extrémité du tube et un moyen de mesure de la pression dans le tube. L'air contenu dans le tube peut être évacué par une ouverture traversant le moyen d'obturation du tube.

Dans le US-A-3,919,880, on a proposé un dispositif pour contrôler l'étanchéité d'un bouchon d'obturation d'un tube, par injection de fluide sous pression dans une partie de tube fermée par le bouchon.

On a également proposé d'effectuer le contrôle des tubes de générateur de vapeur en remplissant d'eau chacun des tubes sur lesquels on réalise le contrôle, puis en introduisant des quantités d'eau supplémentaires dans le tube et en mesurant la pression d'eau dans le tube entre deux introductions d'eau additionnelles.

Un tel procédé ne permet de détecter les tubes présentant des fuites de manière sûre que si le tube a été soigneusement purgé de l'air qu'il contient, lors de son remplissage initial. En outre, le procédé doit être mis en oeuvre successivement sur chacun des tubes du faisceau susceptibles de présenter des fuites. Il est donc nécessaire généralement de réaliser de très nombreuses opérations successives du fait du très grand nombre de tubes du faisceau (plusieurs milliers).

On ne disposait pas jusqu'ici de dispositifs d'essai à l'eau sous pression permettant de réaliser successivement et de manière rapide le contrôle d'étanchéité de nombreux tubes avec une évacuation préalable très efficace de l'air contenu initialement dans les tubes.

Le but de l'invention est donc de proposer un dispositif de contrôle d'étanchéité d'une partie au moins de la paroi d'un tube d'un échangeur de chaleur fixé à chacune de ses extrémités dans une plaque tubulaire, ce dispositif permettant d'évaluer, de la manière la plus exacte possible, le comportement des tubes en service, en ce qui concerne les fuites des fluides d'échange, à travers la paroi, et pouvant être adapté successivement de manière rapide et efficace sur chacun des tubes de l'échangeur, de manière à remplir le tube d'eau en évacuant complètement l'air contenu dans le tube, le dispositif comportant :
- au moins une tête d'injection de fluide sous pression dans l'une des extrémités du tube,
- un moyen d'obturation du tube,
- des moyens d'alimentation en fluide sous pression de la tête d'injection,
- des moyens d'introduction et de fixation rapide de la tête d'injection dans l'extrémité du tube, et
- un moyen de mesure de la pression de fluide sous pression dans le tube.

Dans ce but, le dispositif comporte de plus un moyen d'évacuation d'air contenu initialement dans le tube, pour assurer le remplissage du tube par de l'eau sans présence d'air, constitué par un piston libre racleur, mobile à l'intérieur du tube.

Afin de bien faire comprendre l'invention, on va maintenant décrire, à titre d'exemples non limitatifs, en se référant aux figures jointes en annexe, deux modes de réalisation d'un dispositif suivant l'invention utilisé pour le contrôle des tubes du faisceau d'un générateur de vapeur d'un réacteur nucléaire à eau sous pression.

La figure 1 est une vue en élévation et en coupe partielle d'un générateur de vapeur d'un réacteur nucléaire à eau sous pression.

Les figures 2 et 3 sont des vues schématiques en élévation et en coupe montrant un dispositif de contrôle suivant l'invention et suivant un premier mode de réalisation au cours de deux phases successives d'une opération de contrôle.

La figure 4A est une vue en élévation et en coupe partielle d'une partie du dispositif représenté sur les figures 2 et 3.

La figure 4B est une vue latérale du piston libre utilisé pendant la phase de remplissage du tube de générateur de vapeur.

La figure 4C est une vue agrandie du détail C de la figure 4A.

Les figures 5 et 6 sont des diagrammes montrant la variation en fonction du temps, au cours d'un contrôle d'étanchéité du tube, du volume d'eau ajouté et de la pression dans le tube.

La figure 7 est une vue en élévation et en coupe montrant un dispositif de contrôle suivant l'invention et suivant un second mode de réalisation.

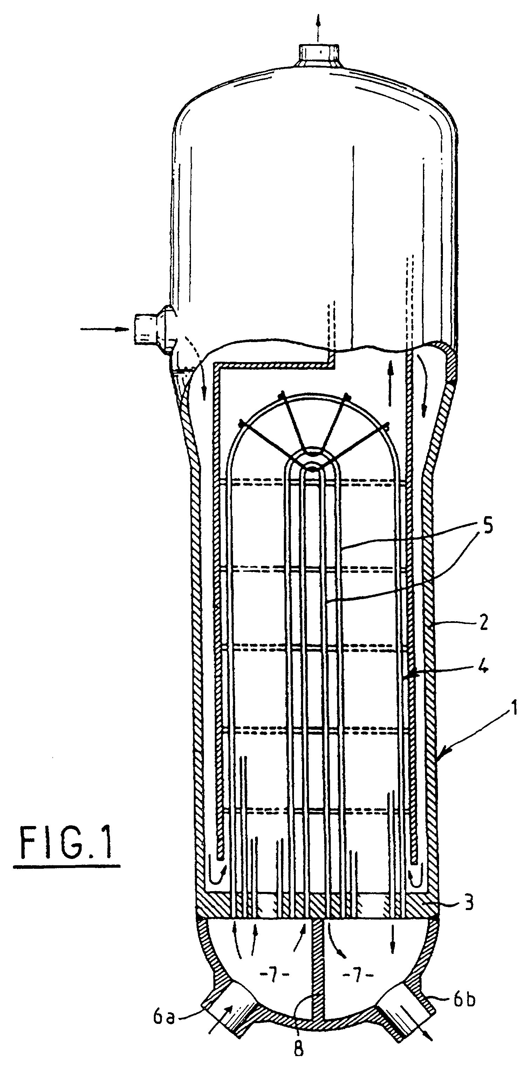

Sur la figure 1, on a représenté un générateur de vapeur d'un réacteur nucléaire à eau sous pression désigné de manière générale par le repère 1 et comportant une enveloppe externe 2 à l'intérieur de laquelle est disposé le faisceau 4 de tubes 5 du générateur de vapeur.

Chacun des tubes 5 du faisceau du générateur de vapeur présente une forme en U et deux branches droites qui sont fixées à leurs extrémités dans une plaque tubulaire 3 solidaire de l'enveloppe 1 du générateur de vapeur.

Les parties d'extrémité des tubes 5 du faisceau qui traversent la plaque tubulaire 3 débouchent dans une boîte à eau 7 de forme hémisphérique séparée en deux parties par une cloison 8. La boîte à eau 7 dont chacune des deux parties est reliée au circuit primaire du générateur de vapeur par l'intermédiaire d'une tubulure 6a ou 6b permet de réaliser la circulation d'eau primaire à l'intérieur de chacun des tubes 5 du faisceau 4 du générateur de vapeur.

La paroi hémisphérique de la boîte à eau 7 est également traversée par des trous d'homme qui permettent d'accéder à l'intérieur de la boîte à eau 7, pendant les périodes d'arrêt du réacteur nucléaire, l'enveloppe du générateur de vapeur et les tubes étant vides d'eau et remplis d'air.

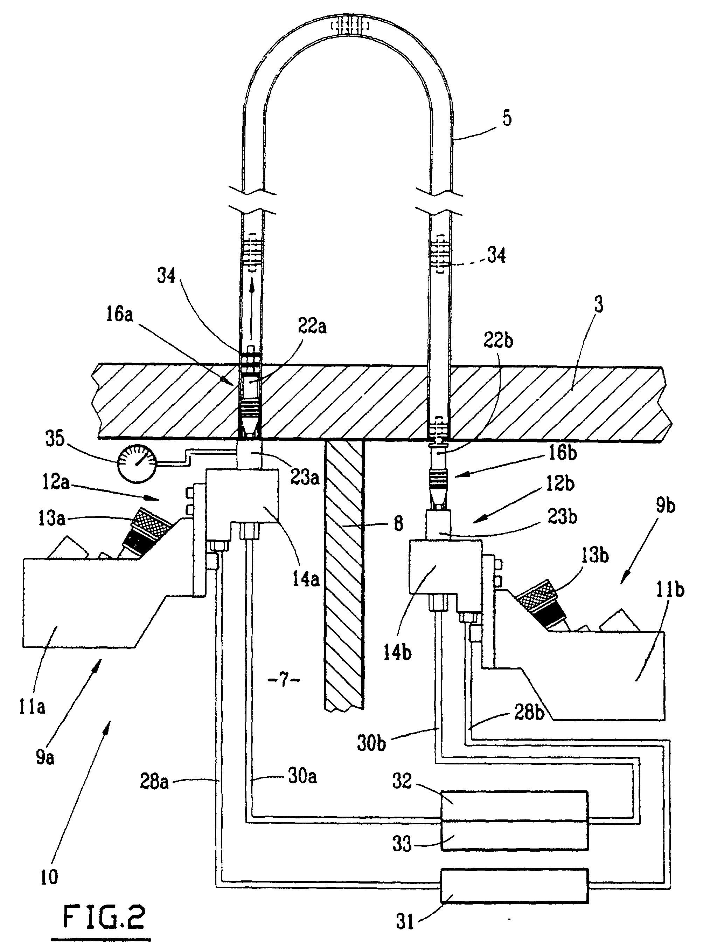

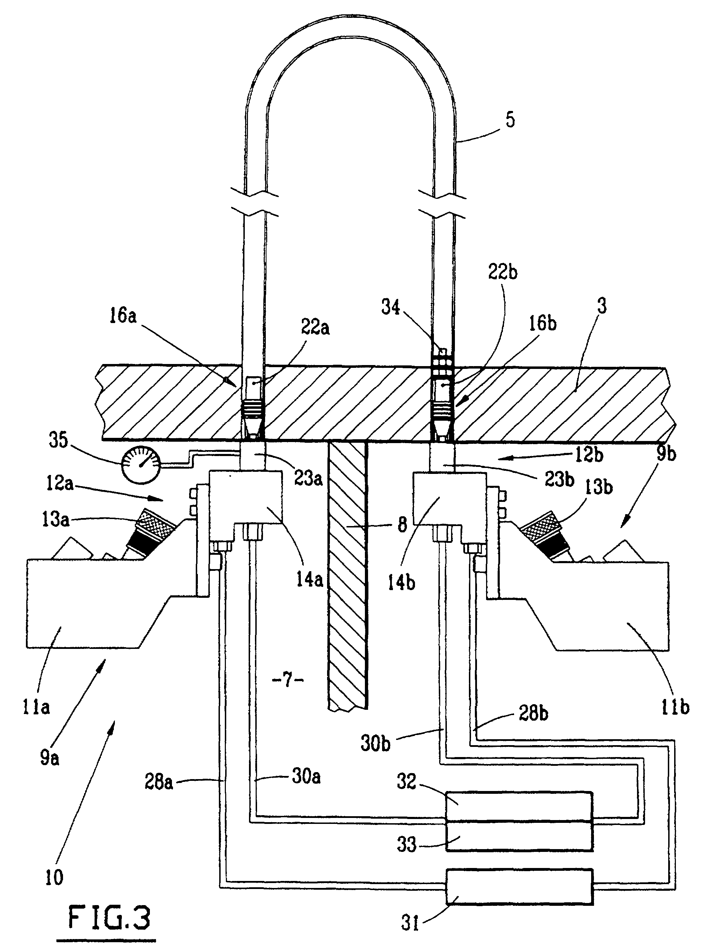

Sur les figures 2 et 3, on a représenté un tube 5 du faisceau du générateur de vapeur au cours de deux phases d'une opération de contrôle d'étanchéité de la paroi du tube en utilisant le dispositif suivant l'invention.

Les parties d'extrémité des branches droites du tube 5 qui traversent la plaque tubulaire 3 débouchent dans la boîte à eau 7, de part et d'autre de la cloison 8, dans le compartiment d'entrée et dans le compartiment de sortie, respectivement, de la boîte à eau 7.

Le procédé de contrôle d'étanchéité suivant l'invention est réalisé pendant une période d'arrêt du réacteur nucléaire, après vidange complète du générateur de vapeur. L'enveloppe du générateur de vapeur et les tubes sont alors remplis d'air.

Le contrôle nécessite la mise en oeuvre d'un dispositif dont une partie est introduite à l'intérieur de la boîte à eau du générateur de vapeur, par les trous d'homme débouchant dans chacun des compartiments et dont une autre partie est à l'extérieur de la boîte à eau du générateur de vapeur, au niveau d'un poste de contrôle desservi par des opérateurs.

Le dispositif de contrôle suivant l'invention qui est désigné de manière générale par le repère 10 présente deux parties 9a et 9b qui sont destinées à être introduites dans la boîte à eau 7 du générateur de vapeur, dans l'un et dans l'autre des deux compartiments de la boîte à eau. Les deux parties 9a et 9b du dispositif 10 sont identiques, de sorte que seule la partie 9a du dispositif sera décrite, ses éléments constitutifs étant désignés chacun par une référence comportant l'indice a. Les éléments constitutifs correspondants de la partie 9b du dispositif 10 sont désignés par les mêmes repères avec l'indice b.

La partie 9a du dispositif 10 comporte un support 11a qui peut être fixé à l'extrémité d'un bras de manutention introduit à l'intérieur du compartiment de la boîte à eau ou constitué par une partie d'extrémité d'un bras de manutention.

De tels bras de manutention sont parfaitement connus et sont utilisés pour effectuer des opérations de contrôle et de réparation des générateurs de vapeur, depuis la boîte à eau de ces générateurs de vapeur. Ces bras de manutention connus permettent de placer un outillage fixé à l'extrémité du bras dans l'alignement axial de l'extrémité d'un tube quelconque du faisceau du générateur de vapeur débouchant dans le compartiment de la boîte à eau où est disposé le bras de manutention. Ces bras de manutention permettent également d'introduire l'outil à l'intérieur du tube par son extrémité débouchant dans le compartiment de la boîte à eau, par déplacement dans la direction verticale.

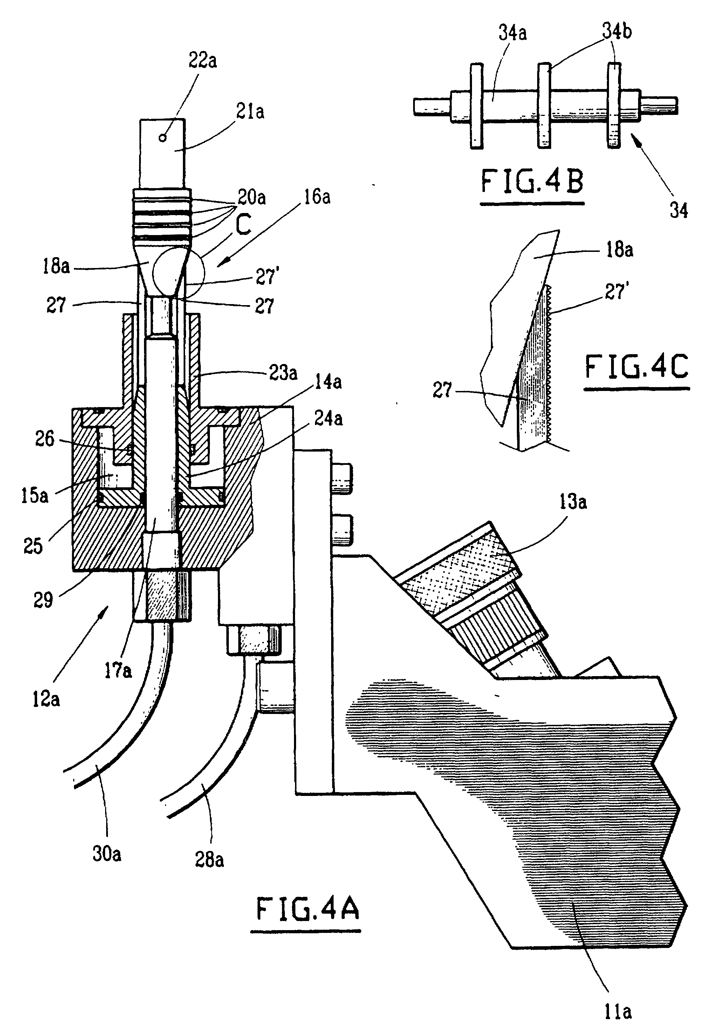

Sur les figures 2 et 3 ainsi que sur la figure 4A, on voit que le support 11a porte d'une part une caméra vidéo 13a et d'autre part, à son extrémité, un ensemble hydraulique 12a comportant des moyens de fixation d'une tête d'injection d'eau 16a à l'intérieur de l'extrémité du tube.

L'ensemble hydraulique 12a comporte un corps 14a, dans lequel est ménagée une chambre 15a, comme représenté sur la figure 4A.

La tête d'injection d'eau 16a comporte un tube 17a qui est fixé à l'intérieur du support 14a, de manière à traverser la chambre 15a dans une direction axiale. L'extrémité du tube 17a est solidaire d'un élément tubulaire d'extrémité ou bouchon 18a comportant une partie tronconique évasée vers le haut dont la petite base est raccordée à l'extrémité du tube 17a et une partie cylindrique dont le diamètre est très légèrement inférieur au diamètre intérieur du tube 5 du générateur de vapeur. Sur la surface externe de la partie cylindrique du bouchon 18a sont usinées quatre rainures à l'intérieur de chacune desquelles est placé un joint d'étanchéité 20a.

Le bouchon creux 18a communique à l'une de ses extrémités avec l'extrémité du tube d'alimentation 17a et à son autre extrémité avec une manchette 21a de distribution d'eau dans le tube 5 du générateur de vapeur. La paroi de la manchette 21a est traversée par des ouvertures de distribution d'eau 22a de petites dimensions. Le tube d'alimentation 17a est engagé de manière étanche dans un alésage traversant une partie du corps 14a de l'ensemble hydraulique, pour déboucher dans la chambre 15a. Le tube 17a assure la fermeture étanche du fond de la chambre 15a.

La chambre 15a comporte, à son extrémité opposée. à son fond, une ouverture dans laquelle est fixée de manière étanche une pièce annulaire 23a assurant une fermeture partielle de la chambre 15a et comportant une chemise prolongeant axialement la chambre 15a. Un piston 24a est monté mobile dans la direction axiale à l'intérieur de la chambre 15a et à l'intérieur de la chemise de la pièce annulaire 23a. Le piston 24a comporte une partie d'extrémité à grand diamètre comprenant un segment périphérique 25 qui est montée mobile et étanche dans la chambre 15a et une partie à diamètre réduit qui est montée mobile et étanche à l'intérieur de l'alésage de la pièce annulaire 23a grâce à un joint 26.

La partie du piston 24a à diamètre réduit se prolonge à l'intérieur de l'alésage de la manchette de la pièce annulaire 23a sous la forme d'un manchon comportant des fentes longitudinales délimitant entre elles au moins deux doigts flexibles 27. Comme il est visible sur la figure 4C, chacun des doigts flexibles 27 comporte à son extrémité, sur sa surface externe en forme de portion de cylindre, une zone crantée 27'. De plus, les doigts flexibles 27 comportent à leur extrémité une surface interne en forme de portion de tronc-de-cône dont l'angle au sommet est sensiblement égal à l'angle au sommet de la partie tronconique du bouchon 18a.

La chambre 15a peut être alimentée, d'un côté ou de l'autre de la partie à grand diamètre du piston 24a, en fluide hydraulique, par l'intermédiaire d'une tuyauterie 28a fixée sur le corps 14a de l'ensemble hydraulique et de canaux (non représentés) usinés à l'intérieur du corps 14a de l'ensemble hydraulique et débouchant dans la chambre 15a.

Le piston 24a réalisé sous une forme tubulaire est monté glissant et étanche sur le tube 17a, par l'intermédiaire d'un joint d'étanchéité 29.

Le tube 17a est alimenté en eau par l'intermédiaire d'un conduit 30a.

Comme il est visible sur les figures 2 et 3, les conduits 28a et 28b d'alimentation en fluide hydraulique des ensembles hydrauliques 12a et 12b respectivement sont reliés à une pompe d'alimentation en fluide hydraulique sous pression 31 qui est disposée à l'extérieur de la boîte à eau 7 du générateur de vapeur.

Les conduits 30a et 30b d'alimentation des têtes 16a et 16b en eau sous pression sont reliés, à l'extérieur de la boîte à eau, à une pompe 32 alimentée par un réservoir d'eau 33.

La pompe 31 assurant l'alimentation en fluide hydraulique de l'ensemble hydraulique 12a et/ou de l'ensemble hydraulique 12b permet le déplacement du piston 24a ou 24b, de manière à déplacer les doigts flexibles 27 associés au piston assurant le verrouillage de la tête d'injection 16a ou 16b à l'intérieur du tube 5, comme il sera expliqué plus loin.

La pompe 32 permet d'alimenter la tête d'injection 16a et/ou la tête 16b en eau sous pression.

Sur la figure 4B, on a représenté un élément 34 constituant un piston libre racleur qui peut être déplacé à l'intérieur du tube 5 par un flux d'eau introduit par une extrémité du tube 5 par l'intermédiaire d'un bouchon tel que 16a et 16b.

Le piston racleur 34 comporte un corps cylindrique 34a dont les extrémités présentent un diamètre réduit et trois disques racleurs 34b dont le diamètre est sensiblement égal au diamètre intérieur du tube 5 du générateur de vapeur.

Le dispositif de contrôle d'étanchéité 10 représenté sur les figures 2 et 3 comporte de plus un manomètre 35 permettant de mesurer la pression à l'intérieur du tube 5 pendant le contrôle d'étanchéité du tube.

On va maintenant décrire, en se référant à l'ensemble des figures 1, 2, 3, 4A et 4B, une opération de contrôle d'étanchéité d'un tube de générateur de vapeur en utilisant le dispositif de contrôle 10 qui vient d'être décrit.

Les parties 9a et 9b du dispositif 10 comportant les supports 11a et 11b sont introduites dans les compartiments correspondants de la boîte à eau du générateur de vapeur qui est vide d'eau et remplie d'air.

Les extrémités du tube 5 débouchant sous la plaque tubulaire 3 sont repérées dans chacun des compartiments de la boîte à eau et les supports 11a et 11b sont mis en position de manière que les têtes 16a et 16b se trouvent dans le prolongement axial exact des extrémités du tube 5.

Le support 11a est déplacé vers le haut de manière à introduire la tête 16a dans une première extrémité du tube 5. Les joints 20a assurent une étanchéité entre la paroi intérieure du tube et le bouchon de la tête 16a.

Pendant l'introduction de la tête 16a dans le tube 5, on visualise la tête et l'extrémité du tube grâce à la caméra 13a. On peut ainsi contrôler la manoeuvre de manière précise, depuis l'extérieur de la boîte à eau.

On alimente la chambre 15a de l'ensemble hydraulique 12a par l'intermédiaire de la pompe 31 et de la conduite 28a. Le piston 24a se déplace vers le haut de manière que la surface tronconique interne de la partie d'extrémité des doigts flexibles 27 vienne en contact avec la surface extérieure de la partie tronconique du bouchon 18a.

Le bouchon 18a se trouve engagé à l'intérieur de l'extrémité du tube 5 de manière suffisante pour que sa partie tronconique se trouve également à l'intérieur du tube. Lorsque les doigts flexibles 27 viennent en contact avec la partie tronconique du bouchon 18a, cette partie tronconique provoque un écartement des doigts dont la surface crantée externe 27' vient en contact avec le métal du tube de manière à assurer un ancrage efficace du bouchon 18a et de la tête 16a à l'intérieur du tube.

Le piston libre 34 est engagé à l'intérieur du tube et vient reposer par l'intermédiaire d'un premier disque d'étanchéité 34b sur la surface supérieure de la manchette d'injection d'eau 21a.

La tête d'injection 16b est disposée légèrement en-dessous de la seconde extrémité du tube 5, de manière qu'il subsiste un espace entre l'entrée du tube et la partie supérieure de la tête d'injection 16b (figure 2).

On injecte de l'eau dans le tube 5 par sa première extrémité en utilisant la tête d'injection 16a ancrée à l'intérieur du tube 5. L'eau injectée déplace le piston libre racleur 34 à l'intérieur du tube, comme représenté sur la figure 2 où le piston libre a été montré dans différentes positions successives à l'intérieur du tube. Lors de son déplacement, le piston libre racleur 34, poussé par l'eau injectée à l'intérieur du tube, refoule l'air contenu dans le tube en direction de la seconde extrémité du tube. Du fait que cette seconde extrémité du tube n'est pas fermée par la seconde tête d'injection 16b, l'air contenu dans le tube 5 est évacué par cette seconde extrémité, au cours du déplacement du piston racleur 34. L'eau injectée effectue le remplissage du tube à l'arrière du piston 34, jusqu'au moment où le piston 34 parvient à la seconde extrémité du tube et vient reposer sur l'extrémité supérieure de la manchette 22b d'injection de la seconde tête d'injection 16b.

Dès que le piston libre 34 est parvenu à la seconde extrémité du tube, on déplace le second support 11b vers le haut, de manière à engager la seconde tête d'injection 16b à l'intérieur de la seconde extrémité du tube 5. Pendant cette manoeuvre, le piston libre 34 assure une certaine retenue de l'eau remplissant le tube 5. La manoeuvre se fait sous le contrôle de la caméra 13b.

La tête d'injection 16b est engagée dans la seconde extrémité du tube, de manière que le second bouchon 18b se trouve entièrement à l'intérieur du tube 5. On actionne alors le piston 24b de l'ensemble hydraulique 12b pour assurer l'ancrage du bouchon de la tête d'injection 16b dans la seconde extrémité du tube 5.

En utilisant la pompe 32, on injecte alors dans le tube 5, par ses extrémités, des quantités additionnelles d'eau de manière à faire monter la pression dans le tube.

La montée en pression de l'eau à l'intérieur du tube est réalisée par paliers successifs, la pompe 32 étant arrêtée après un certain nombre de cycles de fonctionnement de la pompe prédéterminé. On effectue pour cela un comptage du nombre de déplacements du piston de la pompe.

On mesure en continu la pression de l'eau dans le tube en utilisant le manomètre 35.

L'injection de quantités supplémentaires d'eau dans le tube provoque une montée de la pression de l'eau dans le tube, jusqu'à un certain niveau dépendant de la quantité d'eau supplémentaire injectée.

Après arrêt de la pompe, dans le cas d'un tube ne présentant pas de fuite, la pression reste constante à l'intérieur du tube. Au redémarrage de la pompe pour injecter une nouvelle quantité supplémentaire d'eau dans le tube, la pression augmente à nouveau jusqu'à un second palier qui est atteint lorsqu'on arrête à nouveau la pompe après injection d'une quantité d'eau déterminée.

On peut ainsi réaliser des paliers successifs de pression. On mesure les quantités d'eau additionnelles introduites dans le tube et la pression, en fonction du temps.

Dans le cas d'un tube présentant une fuite, lorsqu'on arrête le pompage d'une quantité additionnelle d'eau dans le tube, la pression d'eau dans le tube décroît du fait de l'écoulement d'eau par la fuite.

Le repérage d'une décroissance de la pression dans le tube après arrêt de la pompe permet de déceler un tube présentant une fuite. Dans le cas d'un tube présentant une fuite, on peut mesurer le débit de cette fuite, en réalimentant le tube en eau additionnelle de manière à faire remonter la pression au niveau de départ du palier puis en arrêtant à nouveau le pompage d'eau additionnelle. Après une certaine décroissance de la pression, on réalimente le tube en eau additionnelle jusqu'à obtenir la pression de départ du palier. En recommençant cette opération pendant une durée déterminée et en calculant la quantité d'eau totale introduite dans le tube, on peut déterminer le débit de fuite du tube à une pression donnée.

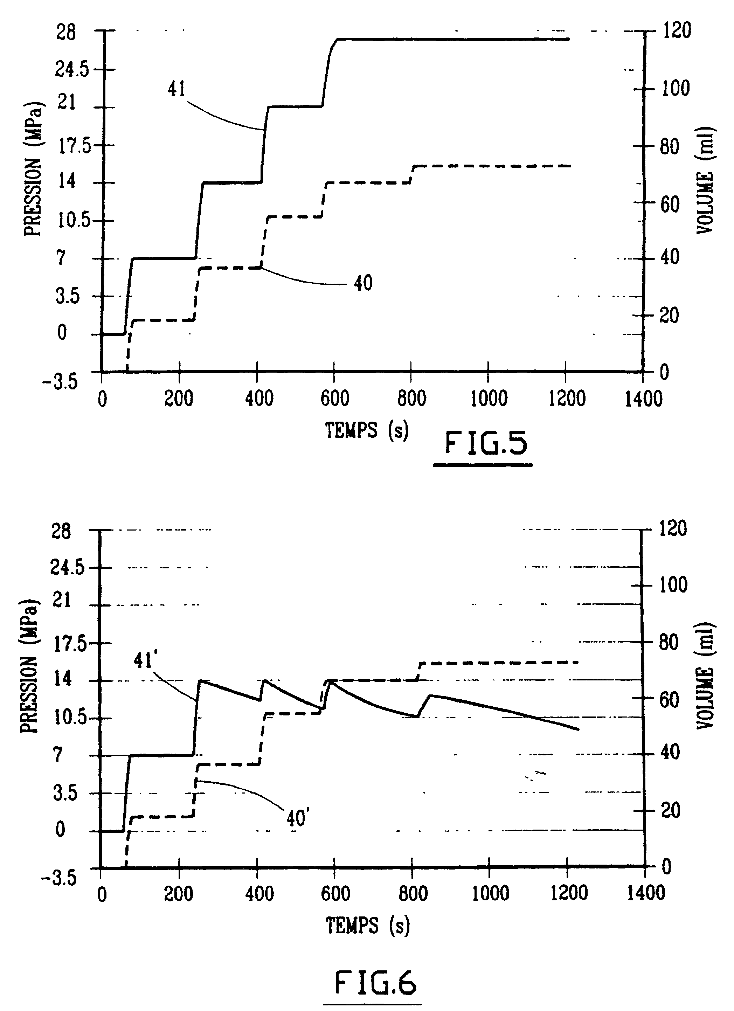

Sur la figure 5, on a représenté les variations du volume total d'eau additionnelle introduit dans un tube (courbe 40) et la pression à l'intérieur du tube (courbe 41), en fonction du temps, dans le cas d'un tube ne présentant pas de fuite.

Chacun des paliers de pression correspondant à une période d'arrêt de la pompe est parfaitement plat, jusqu'au moment où l'on atteint le dernier palier correspondant à la pression maximale d'essai, cette pression étant de l'ordre de 27 MPa. La pression du dernier palier restant constante, on arrête l'essai en déclarant le tube exempt de fissure.

Sur la figure 6, on a représenté un diagramme donnant le volume additionnel d'eau introduit dans le tube (courbe 40') et la pression dans le tube (courbe 41') en fonction du temps, dans le cas d'un tube présentant une fuite.

Le premier palier de pression à une pression de l'ordre de 7 MPa est parfaitement plat et l'essai est poursuivi en introduisant une quantité additionnelle d'eau pour faire monter la pression jusqu'à une valeur de 14 MPa. Lorsqu'on arrête la pompe, la pression dans le tube décroît en fonction du temps, ce qui traduit la présence d'une fissure dans le tube. Après une certaine durée de l'ordre de 200 secondes, on injecte une nouvelle quantité d'eau additionnelle dans le tube de manière à faire remonter la pression de l'eau jusqu'à la valeur de 14 MPa. On arrête la pompe et la pression décroît de nouveau du fait de la présence de la fuite.

On recommence périodiquement les injections d'eau de manière à faire remonter la pression après chaque injection d'eau additionnelle à la valeur de 14 MPa. On mesure la quantité d'eau totale introduite dans le tube pendant une période de temps et on en déduit le débit de fuite à la pression de 14 MPa.

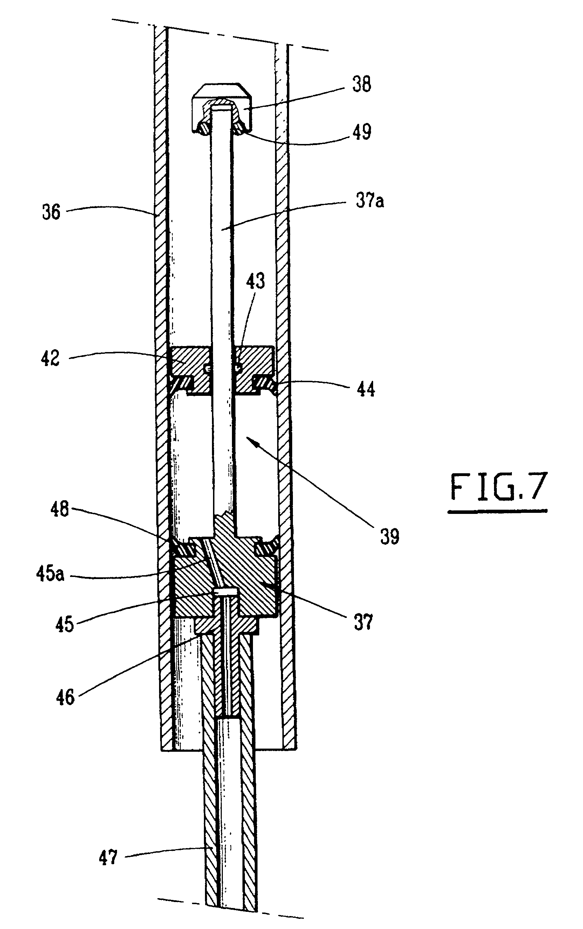

Sur la figure 7, on a représenté un second mode de réalisation d'un dispositif de contrôle suivant l'invention qui peut être utilisé pour effectuer le contrôle de la paroi d'un tronçon de tube de générateur de vapeur, dans lequel le tube 36 est susceptible de comporter des fissures.

Ce second mode de réalisation peut être mis en oeuvre de manière avantageuse, lorsqu'un premier repérage a permis de déceler des zones défectueuses du tube ou encore dans le cas où il n'est nécessaire d'effectuer le contrôle du tube que dans une zone, par exemple dans la zone de transition située au voisinage de la face de sortie de la plaque tubulaire. Dans ce cas, on peut éviter la mise en place d'un dispositif tel que représenté sur les figures 2 et 3 qui comporte des éléments qui doivent être introduits dans les deux parties de la boîte à eau et on évite également un remplissage complet du tube par de l'eau avec évacuation de l'air contenu dans le tube.

Le dispositif représenté sur la figure 7 qui est désigné de manière générale par le repère 39 comporte une tête d'injection 37 d'eau à l'intérieur du tube qui comporte un prolongement axial 37a qui se termine au niveau d'une butée d'extrémité 38.

La longueur du prolongement axial 37a de la tête d'injection 37 est déterminée par la longueur du tronçon de tube suivant laquelle on désire effectuer le contrôle d'étanchéité de la paroi.

Un piston libre 42, réalisé sous forme annulaire, est monté mobile sur le prolongement axial 37a de la tête d'injection 37 dont la section est circulaire et uniforme.

Un joint d'étanchéité 43 est intercalé entre la surface intérieure du piston 42 et la surface extérieure du prolongement 37a de la tête d'injection 37.

Le piston 42 comporte de plus un joint périphérique annulaire 44 qui peut être un joint à lèvre souple ou un joint torique qui vient en contact étanche, pendant le déplacement du piston, avec l'intérieur du tube 36.

La tête d'injection 37 délimite une chambre 45 qui est fermée par un embout tubulaire 46. Un canal 45a met en communication la chambre 45 de la tête d'injection d'eau 37 avec le volume intérieur du tube 36, au-dessus de la tête 37. L'embout 46 dont l'alésage débouche à l'intérieur de la chambre 45 est relié par l'intermédiaire d'un tuyau flexible 47 à une pompe et à une réserve d'eau identiques à la pompe 32 et à la réserve d'eau 33 du mode de réalisation décrit en regard des figures 2 et 3.

La tête d'injection 37 comporte un joint périphérique 48 qui peut être un joint à lèvre ou un joint torique. Le joint 48 assure l'étanchéité entre la tête d'injection 37 et la surface intérieure du tube 36.

La tête d'injection 37 peut être fixée à l'extrémité d'un bras de manutention disposé à l'intérieur de la boîte à eau du générateur de vapeur, ce bras de manutention permettant de présenter le dispositif de contrôle 39 dans l'alignement axial d'un tube à contrôler et d'introduire la tête d'injection 37 et son prolongement axial 37a sur lequel est engagé le piston libre 42, à l'intérieur du tube 36. On alimente alors en eau la partie du tube située au-dessus de la tête 37, par l'intermédiaire du conduit flexible 47, de l'embout 46, de la chambre 45 et du canal 45a. L'eau introduite dans le tube repousse le piston libre 42 vers le haut. Pendant le déplacement dans la direction verticale et vers le haut du piston 42, le joint 44 frotte de manière étanche contre la surface intérieure du tube 36, de telle sorte que le piston 42 assure une évacuation complète de l'air contenu dans la partie du tube entre la tête d'injection 37 et le piston 42, avant le remplissage de ce tronçon par de l'eau.

En outre, l'eau est retenue dans le tronçon de tube par le joint 48 de la tête 37.

Il est à remarquer que dans ce cas, il n'est pas nécessaire de réaliser un ancrage de la tête d'injection 37 dans le tube, un simple maintien de la tête d'injection par le bras de manutention étant suffisant pour maintenir en position fixe étanche la tête d'injection 37.

Le piston 42 se déplace le long du prolongement axial 37a de la tête d'injection 37, jusqu'au moment où la surface supérieure du piston 42 vient en contact avec la surface inférieure de la butée 38 sur laquelle est. rapporté, de préférence, un joint d'étanchéité 49. Le piston libre 42 et la butée 38 constituent alors un bouchon d'obturation du tronçon de tube dans lequel on réalise le contrôle de paroi.

Le contrôle de la paroi du tube est réalisé par des opérations analogues à celles du procédé de contrôle de la paroi de l'ensemble du tube tel que décrit en regard des figures 2 à 6.

Après remplissage complet du tube par de l'eau, on injecte des quantités supplémentaires d'eau dans le tronçon de tube fermé par le piston 42 coopérant avec la butée 38, de manière à faire monter la pression par palier à l'intérieur du tube 36. Il est à remarquer que lorsque la pression augmente dans le tronçon du tube 36, les joints 44 du piston libre 42 et 48 de la tête d'injection 37 ont tendance à se déformer de manière à assurer une fermeture étanche entre le piston libre ou la tête d'injection et la paroi intérieure du tronçon de tube 36.

Un manomètre permet de mesurer la pression à l'intérieur du tronçon de tube, en particulier entre deux additions successives d'eau à l'intérieur du tronçon de tube.

On contrôle l'étanchéité et on mesure éventuellement le débit de fuite du tronçon de tube de manière analogue à ce qui a été décrit en regard des figures 2 à 6, dans le cas du contrôle de la paroi d'un tube complet.

Le dispositif suivant l'invention, qu'il soit réalisé comme représenté sur les figures 2 et 3 et utilisé pour effectuer le contrôle d'un tube complet ou qu'il soit utilisé pour effectuer le contrôle d'un tronçon de tube et réalisé comme représenté sur la figure 7, peut être utilisé pour obtenir de manière rapide une information très précise concernant la présence d'une fuite dans la paroi d'un tube de générateur de vapeur et éventuellement le débit de la fuite. Le contrôle effectué permet de détecter des fissures et des fuites de manière extrêmement sûre, dans la mesure où le dispositif de contrôle permet de purger préalablement le tube ou le tronçon de tube de l'air qu'il contient initialement, avant d'effectuer le remplissage du tube ou du tronçon de tube par de l'eau.

En outre, dans le cas où l'on doit effectuer des contrôles d'un grand nombre de tubes ou d'un grand nombre de tronçons de tubes, la ou les têtes d'injection d'eau du dispositif peuvent être mises en place très rapidement dans la ou les extrémités de tube pour effectuer le contrôle. L'obturation du tube est également réalisée de manière rapide ou automatique.

En recommençant l'opération de contrôle systématiquement pour chacun des tubes ou des tronçons de tubes suspectés de présenter des défauts, ou pour l'ensemble dès tubes du faisceau éventuellement, on peut déterminer de manière très sûre quels sont les tubes qui doivent être obturés, réparés ou remplacés.

On peut ainsi éviter en particulier d'obturer plus de tubes qu'il n'est nécessaire dans le faisceau du générateur de vapeur.

C'est ainsi que la ou les têtes d'injection du dispositif peuvent présenter des formes ou structures différentes de celles qui ont été décrites. Les moyens de maintien ou d'ancrage des têtes d'injection dans les extrémités du tube peuvent également être différents de ceux qui ont été décrits.

Le procédé et le dispositif suivant l'invention peuvent également être utilisés pour réaliser le contrôle de tubes d'échangeurs de chaleur différents de générateurs de vapeur d'un réacteur nucléaire à eau sous pression et utilisés dans toute industrie telle que l'industrie chimique ou les industries de production d'énergie.

## Revendications

1. Dispositif de contrôle de l'étanchéité d'une partie au moins de la paroi d'un tube (5, 36) d'un échangeur de chaleur fixé à chacune de ses extrémités dans une plaque tubulaire (3), comportant au moins une tête d'injection de fluide sous pression (16a, 16b, 37) dans l'une des extrémités du tube (5, 36), un moyen d'obturation (16b, 42, 38) du tube (5, 36), des moyens (32, 33, 47) d'alimentation en fluide sous pression de la tête d'injection (16a, 16b, 37), des moyens (11a, 11b, 24a, 27) d'introduction et de fixation rapide de la tête d'injection (16a, 16b, 37) dans l'extrémité du tube (5, 36), et un moyen de mesure (35) de la pression de fluide sous pression dans le tube (5, 36),
**caractérisé par** le fait qu'il comporte de plus un moyen d'évacuation d'air contenu initialement dans le tube (5, 36), pour assurer le remplissage du tube (5, 36) par de l'eau sans présence d'air, constitué par un piston libre racleur (34, 42), mobile à l'intérieur du tube (5, 36).

2. Dispositif suivant la revendication 1, **caractérisé par** le fait qu'il comporte une première et une seconde têtes (16a, 16b) d'injection d'eau, dans une première et dans une seconde extrémités, respectivement du tube (5), assurant l'obturation des extrémités du tube (5).

3. Dispositif suivant l'une quelconque des revendications 1 et 2, **caractérisé par** le fait que la tête d'injection (16a, 16b) comporte un bouchon (18a, 18b) réalisé sous forme tubulaire et comportant une partie cylindrique munie de joints périphériques (20a) destinés à assurer l'étanchéité entre la surface extérieure du bouchon (18a, 18b) et la surface intérieure du tube (5, 36), le bouchon (18a, 18b) de forme tubulaire ayant un alésage intérieur en communication avec un tube d'alimentation en eau sous pression, lui-même relié aux moyens d'alimentation en eau (32, 33)

4. Dispositif suivant la revendication 3, **caractérisé par** le fait que le bouchon (18a, 18b) comporte des moyens d'ancrage à l'intérieur du tube (5, 36) constitués par au moins deux doigts (27) flexibles de direction axiale présentant une surface externe dentée (27') et une surface interne destinée à coopérer avec une surface du bouchon (18a, 18b) inclinée par rapport à l'axe du tube (5, 36) pour le déplacement des doigts vers l'extérieur et des moyens (24a) de déplacement des doigts (27) dans la direction axiale entre une position inactive et une position active d'ancrage des doigts (27) par leur surface dentée (27') sur la surface intérieure du tube (5, 36).

5. Dispositif suivant la revendication 1, **caractérisé par** le fait que la tête d'injection (37) comporte un prolongement axial (37a) formant une butée (38) à une extrémité éloignée de la tête d'injection (37) et que le piston libre (42) est monté mobile dans la direction axiale et étanche sur le prolongement (37a) de la tête d'injection (37), de manière à constituer avec la butée (38) le moyen d'obturation du tube, lorsque le piston libre (42) en déplacement dans la direction axiale dans le tube (36) vient en contact avec la butée (38).

6. Dispositif suivant l'une quelconque des revendications 1 à 5, **caractérisé par** le fait que les moyens d'introduction et de fixation rapide de la tête d'injection (16a, 16b, 37) dans l'extrémité du tube (5, 36) comportent un bras de manutention (11a, 11b) susceptible de présenter la tête d'injection (16a, 16b, 37) dans l'alignement axial d'un tube (5, 36) quelconque de l'échangeur de chaleur et d'introduire la tête d'injection (16a, 16b, 37) dans la partie d'extrémité du tube (5, 36).

7. Dispositif suivant la revendication 6, **caractérisé par** le fait qu'une caméra vidéo (13a, 13b) est fixée sur le bras de manutention (11a, 11b) de manière à contrôler à distance l'introduction de la tête d'injection (16a, 16b, 37) dans l'extrémité du tube (5, 36).

## Claims

1. Device for detecting leaks in at least part of the wall of a tube (5, 36) of a heat exchanger which is secured at each end in a tube plate (3), comprising at least one head (16a, 16b, 37) for injecting pressurised fluid into one end of the tube (5, 36), means (16b, 42, 38) for sealing the tube (5, 36), means (32, 33, 47) for supplying pressurised fluid to the injection head (16a, 16b, 37), means (11a, 11b, 24a, 27) for introducing the injection head (16a, 16b, 37) into the end of the tube (5, 36) and quickly fixing it therein, and means (35) for measuring the pressure of pressurised fluid in the tube (5, 36), **characterised in that** it further comprises means for evacuating air initially contained in the tube (5, 36), for ensuring that the tube (5, 36) is filled with water with no air present, consisting of a free scraper piston (34, 42) which is movable inside the tube (5, 36) .

2. Device according to claim 1, **characterised in that** it comprises a first and a second water injection head (16a, 16b), in a first and second end, respectively, of the tube (5), ensuring that the ends of the tube (5) are sealed.

3. Device according to any one of claims 1 and 2, **characterised in that** the injection head (16a, 16b) comprises a tubular stopper (18a, 18b) comprising a cylindrical portion provided with peripheral joints (20a) intended to ensure a tight seal between the outer surface of the stopper (18a, 18b) and the inner surface of the tube (5, 36), the tubular stopper (18a, 18b) having an internal bore communicating with a tube for supplying pressurised water which is in turn connected to the water supply means (32, 33).

4. Device according to claim 3, **characterised in that** the stopper (18a, 18b) comprises means for anchoring to the inside of the tube (5, 36) which consist of at least two axially directed flexible fingers (27) having a serrated outer surface (27') and an inner surface adapted to co-operate with a surface of the stopper (18a, 18b) which is inclined relative to the axis of the tube (5, 36) for moving the fingers outwards and means (24a) for moving the fingers (27) in the axial direction between an inactive position and an active position of anchoring the fingers (27) by their serrated surface (27') on the inner surfaca of the tube (5, 36).

5. Device according to claim 1, **characterised in that** the injection head (37) comprises an axial extension (37a) forming an abutment (38) at an end remote from the injection head (37) and in that the free piston (42) is mounted to be axially movable in leaktight manner on the extension (37a) of the injection head (37), so as to form, with the abutment (38), the means for sealing the tube when the free piston (42) moving axially within the tube (36) comes into contact with the abutment (38).

6. Device according to any one of claims 1 to 5, **characterised in that** the means for introducing the injection head (16a, 16b, 37) into the end of the tube (5, 36) and rapidly fixing it therein comprise an operating arm (11a, 11b) capable of presenting the injection head (16a, 16b, 37) in the axial alignment of any tube (5, 36) of the heat exchanger and of introducing the injection head (16a, 16b, 37) into the end part of the tube (5, 36).

7. Device according to claim 6, **characterised in that** a video camera (13a, 13b) is fixed to the operating arm (11a, 11b) for remotely monitoring the introduction of the injection head (16a, 16b, 37) into the end of the tube (5, 36) .

## Patentansprüche

1. Vorrichtung zur Dichtheitsprüfung mindestens eines Teils der Wand eines Rohrs (5, 36) eines Wärmetauschens, das an jedem seiner Enden in einer Rohrplatte (3) befestigt ist, mit mindestens einem Kopf (16a, 16b, 37) zum Einspritzen von Druckfluid in eines der Enden des Rohrs (5, 36), einer Einrichtung (16b, 42, 38) zum Verschließen des Rohrs (5, 36), Einrichtungen (32, 33, 47) zum Speisen des Einspritzkopfes (16a, 16b, 37) mit Druckfluid, Einrichtungen (11a, 11b, 24a, 27) zur Einführung und schnellen Befestigung des Einspritzkopfes (16a, 16b, 37) im Ende des Rohres (5, 36), und einer Einrichtung (35) zum Messen des Drucks des Druckfluids im Rohr (5, 36),
**dadurch gekennzeichnet, daß** sie außerdem eine Einrichtung zur Evakuierung der ursprünglich im Rohr (5, 36) vorhandenen Luft aufweist, um das Füllen des Rohrs (5, 36) mit Wasser ohne Vorhandensein von Luft zu gewährleisten, die aus einem freien Abstreifkolben (34, 42) besteht, der innerhalb des Rohrs (5, 36) beweglich ist.

2. Vorrichtung nach Anspruch 1, **dadurch gekennzeichnet, daß** sie einen ersten und einen zweiten Wasser-Einspritzkopf (16a, 16b) in einem ersten bzw. zweiten Ende des Rohrs (5) aufweist, die das Verschließen der Enden des Rohrs (5) gewährleisten.

3. Vorrichtung nach einem der Ansprüche 1 und 2, **dadurch gekennzeichnet, daß** der Einspritzkopf (16a, 16b) einen Stopfen (18a, 18b) aufweist, der rohrförmig hergestellt ist und einen mit Umfangsdichtungen (20a) versehenen, zylindrischen Bereich aufweist, die die Dichtheit zwischen der Außenfläche des Stopfens (18a, 18b) und der Innenfläche des Rohrs (5, 36) gewährleisten, wobei der rohrförmige Stopfen (18a, 18b) eine innere Bohrung aufweist, die mit einem Rohr zur Speisung mit Druckwasser in Verbindung steht, das selbst mit den Wasserzufuhreinrichtungen (32, 33) in Verbindung steht.

4. Vorrichtung nach Anspruch 3, **dadurch gekennzeichnet, daß** der Stopfen (18a, 18b) Einrichtungen zur Verankerung innerhalb des Rohrs (5, 36) aufweist, die aus mindestens zwei flexiblen Fingern (27) axialer Ausrichtung bestehen, die eine gezahnte Außenfläche (27') und eine Innenfläche aufweisen, die dazu bestimmt ist, mit einer Fläche des Stopfens (18a, 18b) zusammenzuwirken, die in bezug auf die Achse des Rohrs (5, 36) geneigt ist, für die Verschiebung der Finger nach außen, und Einrichtungen (24a) zur Verschiebung der Finger (27) in axialer Richtung zwischen einer inaktiven Stellung und einer aktiven Stellung der Verankerung der Finger (27) durch ihre gezahnte Fläche (27') auf der Innenfläche des Rohrs (5, 36).

5. Vorrichtung nach Anspruch 1, **dadurch gekennzeichnet, daß** der Einspritzkopf (37) eine axiale Verlängerung (37a) aufweist, die einen Anschlag (38) an einem vom Einspritzkopfe (37) entfernten Ende bildet, und daß der freie Kolben (42) beweglich in axialer Richtung und dicht auf der Verlängerung (37a) des Einspritzkopfes (37) montiert ist, um mit dem Anschlag (38) die Einrichtung zum Verschließen des Rohrs zu bilden, wenn der freie Kolben (42) bei der Verschiebung in axialer Richtung im Rohr (36) mit dem Anschlag (38) in Kontakt gelangt.

6. Vorrichtung nach einem der Ansprüche 1 bis 5, **dadurch gekennzeichnet, daß** die Einrichtung zur Einführung und schnellen Befestigung des Einspritzkopfes (16a, 16b, 37) im Ende des Rohrs (5, 36) einen Handhabungsarm (11a, 11b) aufweisen, der den Einspritzkopf (16a, 16b, 37) axial zu einem beliebigen Rohr (5, 36) des Wärmetauschers ausrichten und den Einspritzkopf (16a, 16b, 37) in den Endbereich des Rohrs (5, 36) einführen kann.

7. Vorrichtung nach Anspruch 6, **dadurch gekennzeichnet, daß** eine Videokamera (13a, 13b) auf dem Handhabungsarm (11a, 11b) befestigt ist, um aus der Entfernung die Einführung des Einspritzkopfes (16a, 16b, 37) in das Ende des Rohrs (5, 36) zu kontrollieren.
